# EUROPEAN PATENT SPECIFICATION

(11) **EP 2 017 176 B1**
(45) Date of publication and mention of the grant of the patent: **26.10.2011**
(21) Application number: 08252334.1
(22) Date of filing: 09.07.2008
(51) Int. Cl.: B65B 25/04, B65B 55/02, A23L 3/10

(54) **Method for sterilising a food product**
Verfahren zum Sterilisieren eines Nahrungsmittels
Procédé de stérilisation d'un produit alimentaire

(30) Priority: 17.07.2007 GB 0713873
(43) Date of publication of application: 21.01.2009
(73) Proprietor: H.L. Foods Limited, Spalding, Lincolnshire PE12 9EQ (GB)
(72) Inventor: Wales, Nicolas, Spalding, Lincolnshire PE12 9EQ (GB); Fenton, Timothy, Spalding, Lincolnshire PE12 9EQ (GB); Waine, Matthew, Spalding, Lincolnshire PE12 9EQ (GB)
(74) Representative: Lord, Michael

(56) References cited:
- WO-A-01/26488
- GB-A- 759 238
- US-A- 2 517 542
- US-A- 3 446 636
- US-B1- 6 669 973

## Description

The invention to which this application relates is to a method of providing a food product within a container which can be performed in an efficient and effective manner and, importantly, can be provided in a repeatable manner so as to ensure that the product held within the container is in the required condition to allow storage in ambient conditions and to be in a proper form for subsequent use when dispensed from the container. In particular the invention relates to the preparation of these products using a thermal process such as pasteurisation or sterilisation and reference hereon in to thermal processing should be interpreted as relating to either of the same.

In many food products, such as for example sauces and the like, it is necessary to treat the food product during the manufacture of the same in order to allow the life of the food product and the container in which the same is held, to be maintained for a particular duration, during which time the container is purchased and then the product is dispensed from the container.

One way in which to treat the product is to apply heat from externally of the product and the container such that the heat is absorbed through the product to a sufficient temperature so as to sterilise or pasteurise the food product and the container.

The use of thermal processing in the treatment of food products is well known and is an effective process, particularly in relation to food products which are held in relatively small quantities within a container. The provision of the food products in relatively small quantities, ensures that the heat absorption through the foodstuff can occur sufficiently quickly so as to allow the thermal process to take place in an acceptable time period during the packaging process.

Examples of such thermal treatments are illustrated in US3446636, wherein a method of heat sterilizing a plurality of containers is disclosed. The containers are placed in rows and rotated about the horizontal axis to agitate the contents while heating to sterilise the same.

US6669973 discloses the types of containers and perishable contents thereof which require sterilising in order to provide relatively 'long life' products. US6669973 discloses a method wherein a head space is left in the container after the beverage is added and before sealing and sterilisation.

Furthermore, WO-A2-01/26488 discloses a method of sterilizing and a support means in accordance with the preambles of appended claims 1 and 18.

It is found that whilst acceptable for foodstuffs held in relatively small containers, such as plastic bottles or jars, the level and duration of heat which is required to be applied, once the containers or jars are provided of a larger size for food service purposes causes significant problems. A first problem is that the duration of the application of the heat required to achieve sterilisation, can cause the plastics material from which the containers are made, to become fluid to such an extent that the shape of the container is lost during the thermal process and hence the containers which are subsequently provided for sale, can be of different shapes, may leak and are generally distorted which is unacceptable. A further problem is that the duration of application of heat which is required to achieve the absorbance of heat throughout the entire food product which is held within the container, while maintaining optimal product quality such that the product provided to the end user is in an acceptable form for use means that the overall manufacture of these products, is inefficient and the time required is unacceptable.

These problems are especially prevalent with regard to foodstuffs which have a relatively high pH value greater than 4.6 One known solution to avoid the need for sterilisation, is to acidify the foodstuff. However, with food products which have a high pH, attempts to acidify this type of product, causes significant problems to the taste of the finished product and generally, is unacceptable to the consumer. Thus, at least for high pH foodstuffs, and typically all foodstuffs, there is a need to provide a means of achieving sterilisation of the food product in relatively large quantities, without affecting the quality of the food product or the container in which the same is held.

The aim of the present invention is therefore to provide a method which allows the efficient sterilisation of a food product held within the container, and for this effective sterilisation to be performed, regardless of the particular size or shape of the container and/or the quantity of product held within same.

In a first aspect of the invention, there is provided a method for sterilising a food product held within a container, which container and food product form a retail pack, said method including the steps of filling the container partially with the food product to be held therein, so as to leave a gas filled space within the container, sealing the container with a closure, placing the container in a support means, applying heat and pressure in a controlled manner to the container and food product therein to provide a sterilising effect, and, as the heat and pressure is applied, the container is moved by moving the portion of the support means with the container secured therein so as to cause the gas filled space to move and pass through at least part of the food product in the container **characterised in that** the container is formed of plastic material and the closure of the container is engaged with a portion of the support means so as to ensure that the neck surrounding the closure remains in the required form during the thermal process to prevent deforming and/or leaving.

Typically the food product is fluid. In one embodiment the product has a particulate content up to 90% with particulates up to typically 40mm diameter

In one embodiment, the gas filled space acts as a bubble moving through the food product. In one embodiment the space is of a size which is the same as or greater than 5% of the volume of the foodstuff product held within the container.

Thus, for example, for a container carrying a foodstuff product of 2kg volume, the space will include at least 100ml (corresponding to 5% headspace) of air or another gas or gas mixture.

Preferably, the gas filled space is equivalent to 7% or more of the volume of the foodstuff product.

In one embodiment, the support means is a frame within which a plurality of containers can be held.

In one embodiment, the support means is provided so as to retain each of the containers in position but also to allow a degree of tolerance of movement of the containers during the application of heat and pressure so as to ensure that the containers can expand but still retain the required overall shape and appearance when they leave the process. Preferably the support means are provided so as to ensure that the container sides are restrained during the thermal process. In one embodiment movement along the longitudinal axis of the container is possible so as to allow the thermal process to be achieved.

In one embodiment, the support means are rotated.

In one embodiment the application of heat and pressure is achieved by placing the containers, and support means into a pressurised chamber, and heat and pressure is applied to a sufficient extent so as to cause sterilisation of the food product held within the container.

In one embodiment, the method incorporates the step of exposing the containers to a preconditioning stage, during which the temperature is increased from an ambient temperature to a sterilisation temperature along with the pressure being increased.

Once the pressure and temperature have reached a predetermined level, the containers are exposed to the same for a predetermined period of time during which the containers are moved. The predetermined period of time is calculated with regard to the particular quantity of the foodstuff held within the containers and/or the shape of the containers and/or a predetermined process value. Once the predetermined period of time has elapsed, the temperature applied to the container, is reduced for a predetermined period of time, during which the pressure is maintained. Thereafter, once the temperature has been reduced to a sufficient extent, the pressure is also reduced so that the pressure and temperature are then further reduced to ambient conditions.

It should be appreciated that although the thermal process is described with regard to the achievement of the sterilisation of the foodstuffs, the method herein provided can be used in the pasteurisation of foodstuffs although the temperatures to which the containers are required to be exposed, can be less than those required for sterilisation.

Furthermore, a retail container is disclosed, said container including a food product held within the container in a sealed manner and wherein the container is formed of plastics material and the food product held within the container has been exposed to heat and pressure to sterilise the same prior to retail purchase and wherein the container includes a gas filled space of a volume of at least 5% of the volume of the food product.

Typically, the weight of the food product held within the container is in excess of 1kg. Typically the container is provided for use in the food service industry. Typically the container includes a gas filled space of a volume of at least 5% of the volume of the food product.

In one embodiment, the foodstuff is of a savoury or sweet nature, for example, soup, sauce, pickle, gravy, stock, jam, conserve, custard or other similar product.

In a further aspect of the invention, there is provided a support means containing a plurality of containers, each of said containers incorporating a food product therein and at least part of the support means being mounted to be movable to allow movement of the containers during sterilisation and/or pasteurisation processes, **characterised in that** said containers are formed of plastic material and said support means includes a portion, or plurality of portions which engage with a closure for each respective container to retain said closures in position and further portions which allow the containers to be held in their respective locations in the support means while, at the same time, allowing limited expansion of said containers when held therein.

In one embodiment, the movement of the containers and support means is such as to cause movement of a gas filled space within each of the containers, through the foodstuff in the container. Typically, if the movement is rotation, the speed of rotation of the support means is in the range of 7-15rpm.

Typically the speed of rotation selected is such as to ensure that the gas filled space will move through the food product and hence act to mix the same.

Specific embodiments of the invention will now be described with reference to the accompanying drawings, wherein:-
Figure 1 illustrates in a schematic manner, a flow chart illustrating the process steps in accordance with one embodiment of the invention;
Figure 2 illustrates, in schematic manner, the apparatus used for the application of heat and pressure on the containers in accordance with the invention;

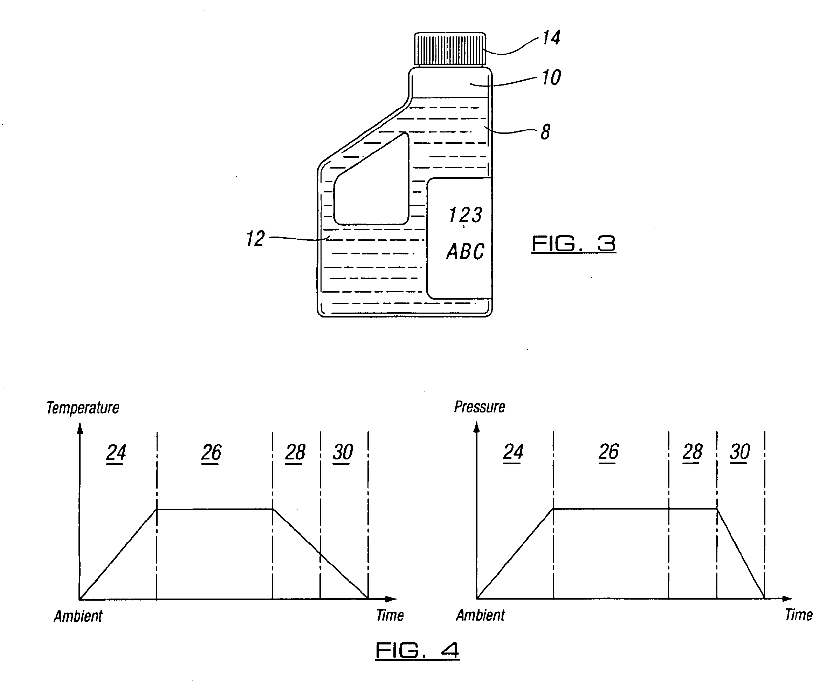

The process commences with the formation of the container 2 and the food product 4. The control of the filling 6 of the container with the fluid food product 8 is important as a gas filled, typically air, space 10 is required to be left in the container as shown in Figure 3 and so the container, should not be entirely filled with the foodstuff. This gas filled space, should be at least 5%, but preferably 7% to 15% of the volume of the food product held within the container. This space 10 effectively, in the subsequent process, forms a bubble which is used to pass through, and mix the food product as the container is moved around.

The container 12 is then sealed 16, which may involve the application of a sealing layer and then a subsequent closure 14, or simply the closure itself. The weight of the container is checked, 18 and a plurality of these containers 12 are then placed into a support means 20 and the support means, in turn is placed into a chamber 22 during which heat and pressure and motion is applied. The application of heat and pressure, is typically in accordance with the pressure, temperature, time charts shown in Figure 4.

A first stage 24 of the process is to increase the heat and pressure from ambient conditions to a temperature of typically 100°C or more and in this example approximately 120°C or more and to a pressure of typically 1 bar gauge and in this example approximately 2 bar absolute or more. The second stage 26 maintains the raised temperature and pressure for a predetermined period of time which is sufficient to allow the heat to pass through and be absorbed by all the food product in each container. After the predetermined period of time, stage 28 commences which is to reduce the temperature but maintain the pressure as this allows the expanded size of the container to collapse more quickly while ensuring that the seal and closure are not blown off the container. Once the foodstuff and container has reached a predetermined temperature, stage 30 can be commenced which is to reduce both the pressure and temperature to ambient conditions. During this process, the containers are rotated or otherwise moved so as to cause the gas filled space in each of the containers to move through the food product and act as a stirrer or mixer which means that the heat transfer occurs more quickly.

It is found that the containers expand, under the increased temperature and pressure especially when formed of plastics material, but by providing the same within the support means, the change in condition and shape of the container, can be controlled.

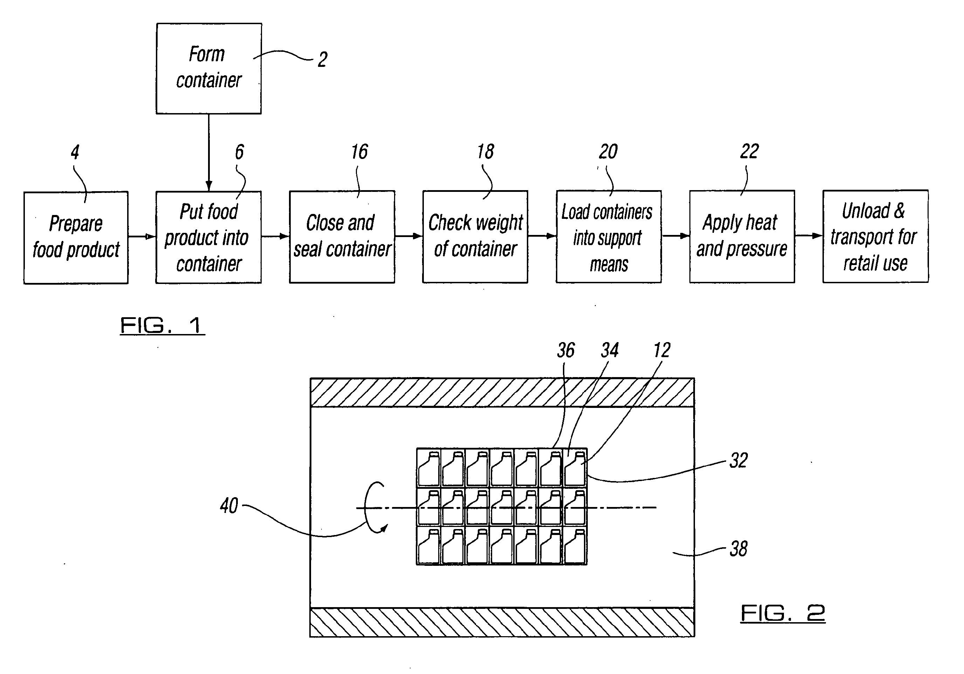

Figure 2 illustrates a support means 32 in the form of a frame, said frame having a plurality of locations 34, each provided for the location of a container 12 therein. Each location includes a portion 36 which ensures that the closure is maintained on the container and also that the container is held within that location but is also able to expand during the application of increased heat and pressure. This therefore allows a controlled expansion and therefore allows the shape of the container to be maintained. Typically, the tolerance which is required for each location can be calculated as the other parameters which affect the expansion of the container are known.

When loaded up, the support means 32 is placed into a chamber 38 into which heat and pressure can be applied and increased to allow the sterilisation of the foodstuff to occur. Typically, the support means is rotated 40 within the chamber 38 at, for example, a rate of 13 rpm. It is found that the ability to rotate the containers, in a controlled manner and also allow the gas filled spaces within each of the containers, to move through the foodstuff, and also the controlled application of heat and pressure as so described, causes the sterilisation of the foodstuff to be reliably achieved can at the same time, to be achieved in a manner which is over a time period which is relatively short and therefore allows the same to be used in food service size container filling lines whilst at the same time ensuring that the quality of the foodstuff is maintained.

It is found that for thermal processing such as sterilisation and pasteurisation, the cycle times for containers which include relatively large volumes of foodstuff, can be similar to those cycle times required for retail pack sizes where the sterilisation or pasteurisation is performed using conventional methodology and the quality of the foodstuff is maintained.

## Claims

1. A method of sterilising a food product (4) held within a container (2), which container and food product form a retail pack, said method including the steps of filling the container partially with the food product to be held therein, so as to leave a gas filled space (10) within the container (2), sealing the container with a closure (14), placing the container in a support means (32), applying heat and pressure in a controlled manner to the container and food product therein to provide a sterilising effect, and, as the heat and pressure is applied (24), the container is moved by moving the support means (32) with the container secured therein so as to cause the gas filled space to move and pass through at least part of the food product in the container, **characterised in that** the container is formed of plastic material and the closure (14) of the container is engaged with a portion (36) of the support means (32) so as to ensure that the neck surrounding the closure (14) remains in the required form during the thermal process to prevent deforming and/ot leaking.

2. A method according to claim 1 wherein the food product is fluid ,

3. A method according to claim 1 wherein the food product has particulate content up to 90% with particulates up to typically 40mm diameter.

4. A method according to claim 1 wherein the gas filled space acts as a bubble moving through the food product.

5. A method according to claim 1 wherein the space is of a size which is at least 5% of the volume of the foodstuff product held within the container.

6. A method according to claim 5 wherein the gas filled space is equivalent to 7% or more of the volume of the foodstuff product.

7. A method according to claim 1 wherein the support means is a frame within which a plurality of containers can be held.

8. A method according to claim 1 wherein the support means is provided so as to retain each of the containers in position and also to allow a degree of tolerance of movement of the containers during the application of heat and pressure so as to ensure that the containers can expand but still retain the required overall shape and appearance when they leave the support means.

9. A method according to claim 1 wherein the support means retain the container sides during the thermal process while allowing movement along the longitudinal axis of the container.

10. A method according to claim 1 wherein the support means are rotated.

11. A method according to claim 1 wherein heat and pressure is applied by placing the containers into a pressurised chamber, said heat and pressure applied therein.

12. A method according to claim 1 wherein the method incorporates the step of exposing the containers to a preconditioning stage, during which the temperature is increased from an ambient temperature to a sterilisation temperature along with the pressure being increased.

13. A method according to claim 1 wherein once the pressure and temperature have reached a predetermined level, the containers are exposed to the same for a predetermined period of time during which the containers are moved.

14. A method according to claim 13 wherein once the predetermined period of time has elapsed, the temperature applied to the container, is reduced for a predetermined period of time, during which the pressure is maintained.

15. A method according to claim 14 wherein once the temperature has been reduced to a sufficient extent, the pressure is also reduced so that the pressure and temperature are then further reduced to ambient conditions.

16. A method according to claim 1 wherein the product is sterilised and/or pasteurised by the method.

17. A method according to claim 16 wherein the product is of a savoury or sweet nature, for example, soup, sauce, pickle, gravy, stock, jam, conserve, custard or other similar product.

18. A support means (32) containing a plurality of containers (2) each of said containers incorporating a food product (4) therein and at least part of the support means being mounted to be movable to allow movement of the containers (2) during sterilisation and/or pasteurisation processes, **characterised in that** said containers are formed of plastic material and said support means includes a portion, or plurality of portions which engage with a closure for each respective container to retain said closures in position and further portions which allow the containers to be held in their respective locations in the support means while, at the same time, allowing limited expansion of said containers (2) when held therein.

19. A support means according to claim 18 wherein the movement of the containers and support means is such as to cause movement of a gas filled space within each of the containers, through the foodstuff in the container.

20. A support means according to claim 18 wherein the movement is rotation in the range of 7-l5rpm.

## Patentansprüche

1. Verfahren zum Sterilisieren eines Nahrungsmittels (4), das sich in einem Behälter (2) befindet, wobei der Behälter und das Nahrungsmittel eine Verbraucherpackung bilden, und wobei das Verfahren die Schritte zum teilweisen Füllen des Behälters mit dem Nahrungsmittel, das sich darin befinden wird, beinhaltet, so dass es einen mit Gas gefüllten Raum (10) innerhalb des Behälters (2) lässt, wobei der Behälter mit einem Verschluss (14) versiegelt wird, und der Behälter in ein Tragmittel (32) platziert wird, wobei Hitze und Druck auf kontrollierte Weise auf den Behälter und das darin enthaltene Nahrungsmittel aufgetragen werden, um eine sterilisierende Auswirkung bereitzustellen, und wenn die Hitze und der Druck aufgebracht werden (24), wird der Behälter durch Bewegen des Tragmittels (32) verschoben, wobei der Behälter darin so befestigt wird, dass er bewirkt, dass sich der mit Gas gefüllte Raum bewegt und durch mindestens einen Teil des Nahrungsmittels in den Behälter geht, **dadurch gekennzeichnet, dass** der Behälter aus Kunststoffmaterial geformt ist und der Verschluss (14) des Behälters in einen Abschnitt (36) des Tragmittels (32) eingerastet ist, um sicherzustellen, dass der Hals, der den Verschluss (14) umgibt, während des Wärmevorgangs in der erforderlichen Form verbleibt, um eine Deformierung and/oder ein Auslaufen zu verhindern.

2. Verfahren nach Anspruch 1, wobei das Nahrungsmittel flüssig ist.

3. Verfahren nach Anspruch 1, wobei das Nahrungsmittel einen Partikelinhalt von bis zu 90 % mit Partikeln von bis zu typischerweise 40 mm Durchmesser enthält.

4. Verfahren nach Anspruch 1, wobei der mit Gas gefüllte Raum als Blase wirkt, die sich durch das Nahrungsmittel bewegt.

5. Verfahren nach Anspruch 1, wobei der Raum von einer Größe ist, die mindestens 5 % des Volumens des Nahrungsmittels ausmacht, das sich im Behälter befindet.

6. Verfahren nach Anspruch 5, wobei der mit Gas gefüllte Raum mit 7 % oder mehr des Volumens des Nahrungsmittels äquivalent ist.

7. Verfahren nach Anspruch 1, wobei das Tragmittel ein Rahmen ist, in dem eine Vielfalt von Behältern gehalten werden kann.

8. Verfahren nach Anspruch 1, wobei das Tragmittel bereitgestellt wird, damit es jeden der Behälter an seinem Platz hält, und auch, um einen Grad an Toleranz der Bewegung der Behälter während des Auftragens der Hitze und des Drucks zulässt, um sicherzustellen, dass sich die Behälter ausdehnen können, aber trotzdem die erforderliche allgemeine Form und Erscheinung behalten, wenn sie das Tragmittel verlassen.

9. Verfahren nach Anspruch 1, wobei das Tragmittel die Behälterseiten während des Wärmevorgangs aufrechterhält, während eine Bewegung an der Längsachse des Behälters entlang ermöglicht wird.

10. Verfahren nach Anspruch 1, wobei das Tragmittel rotiert wird.

11. Verfahren nach Anspruch 1, wobei Hitze und Druck aufgetragen werden, indem die Behälter in eine Druckkammer platziert werden, worin dann die Hitze und der Druck aufgetragen werden.

12. Verfahren nach Anspruch 1, wobei das Verfahren den Schritt der Freilegung der Behälter zu einer Vorkonditionierungsstufe beinhaltet, während der die Temperatur von einer Umgebungstemperatur auf eine Sterilisationstemperatur erhöht wird, und gleichzeitig der Druck erhöht wird.

13. Verfahren nach Anspruch 1, wobei, sobald der Druck und die Temperatur eine vorbestimmte Ebene erreicht haben, die Behälter auf eine vorbestimmte Zeit derselben freigesetzt werden, während der die Behälter bewegt werden.

14. Verfahren nach Anspruch 13, wobei nach Verstreichen der vorbestimmten Zeit die Temperatur, die auf den Behälter aufgetragen wird, auf eine vorbestimmte Zeit reduziert wird, während der Druck aufrechterhalten bleibt.

15. Verfahren nach Anspruch 14, wobei, sobald die Temperatur in einem gewissen Ausmaß reduziert wurde, der Druck ebenfalls reduziert wird, so dass der Druck und die Temperatur dann weiterhin bis zu Umgebungsbedingungen reduziert werden.

16. Verfahren nach Anspruch 1, wobei das Produkt durch das Verfahren sterilisiert und/oder pasteurisiert wird.

17. Verfahren nach Anspruch 16, wobei das Produkt einer pikanten oder süßen Art ist, wie zum Beispiel Suppe, Soße, Eingelegtes, Bratensoße, Brühe, Marmelade, Eingemachtes, Vanillesoße oder ein anderes ähnliches Produkt.

18. Tragmittel (32), das eine Vielfalt von Behältern (2) enthält, von denen jeder Behälter ein Nahrungsmittel (4) enthält und mindestens ein Teil des Tragmittels so angebracht ist, dass es eine Bewegung der Behälter (2) während des Sterilisations- und/oder Pasteurisierprozesses ermöglicht, **dadurch gekennzeichnet, dass** die Behälter aus Kunststoffmaterial geformt wurden und das Tragmittel einen Abschnitt, oder eine Vielfalt von Abschnitten enthält, die in einen Verschluss für jeden entsprechenden Behälter einrasten, damit die Verschlüsse an ihrer Position und an weiteren Positionen gehalten werden, die den Behältern ermöglichen, dass sie an ihren entsprechenden Positionen im Tragmittel gehalten werden, während gleichzeitig eine begrenzte Erweiterung der Behälter (2) ermöglicht wird, wenn sie sich darin befinden.

19. Tragmittel nach Anspruch 18, wobei die Bewegung der Behälter und des Tragmittels derartig ist, dass sie eine Bewegung des mit Gas gefüllten Raums in jedem der Behälter durch das Nahrungsmittel im Behälter verursacht.

20. Tragmittel nach Anspruch 18, wobei die Bewegung eine Umdrehung im Bereich von 7-15 U/min ist.

## Revendications

1. Procédé de stérilisation d'un produit alimentaire (4) contenu dans un récipient (2), ce récipient et le produit alimentaire contenu constituant une marchandise de vente au détail, le procédé comportant les étapes qui consistent à remplir partiellement le récipient du produit alimentaire qu'il va contenir, de manière à laisser un espace (10) rempli de gaz à l'intérieur du récipient (2), à fermer hermétiquement le récipient au moyen d'un système de fermeture (14), à placer le récipient dans une unité de support (32), à soumettre le récipient et le produit alimentaire qu'il contient à une chaleur et à une pression contrôlées afin d'assurer un effet de stérilisation et, à mesure que cette chaleur et cette pression sont appliquées (24), à déplacer le récipient en déplaçant l'unité de support (32) auquel est fixé le récipient de manière à faire déplacer l'espace rempli de gaz et le faire passer à travers une partie au moins du produit alimentaire contenu dans un récipient, **caractérisé en ce que** le récipient est fabriqué en matière plastique et **en ce que** le système de fermeture (14) du récipient se met en prise avec une section (36) de l'unité de support (32) afin d'assurer que le col qui entoure le système de fermeture (14) conserve la forme requise au cours du procédé thermique, ceci pour empêcher la déformation et/ou les fuites.

2. Procédé selon la revendication 1, **caractérisé en ce que** le produit alimentaire est un fluide.

3. Procédé selon la revendication 1, **caractérisé en ce que** le produit alimentaire contient jusqu'à 90% de substance en forme de particules d'un diamètre typique allant jusqu'à 40 mm.

4. Procédé selon la revendication 1, **caractérisé en ce que** l'espace rempli de gaz agit comme une bulle qui se déplace à travers le produit alimentaire.

5. Procédé selon la revendication 1, **caractérisé en ce que** le volume de l'espace est égal au moins à 5% du volume du produit alimentaire contenu dans le récipient.

6. Procédé selon la revendication 5, **caractérisé en ce que** l'espace rempli de gaz est l'équivalent de 7% ou davantage du volume du produit alimentaire.

7. Procédé selon la revendication 1, **caractérisé en ce que** l'unité de support est un bâti dans lequel peuvent être placés plusieurs récipients.

8. Procédé selon la revendication 1, **caractérisé en ce que** l'unité de support est prévue de manière à retenir en place chacun des récipients, et aussi donner un certain degré de tolérance dans le mouvement des récipients pendant l'application de la chaleur et de la pression, ceci pour assurer que les récipients peuvent se dilater mais quand même retenir d'une manière générale leur forme et leur aspect après avoir quitté l'unité de support.

9. Procédé selon la revendication 1, **caractérisé en ce que** l'unité de support retient les parois des récipients pendant le procédé thermique tout en permettant un certain mouvement le long de l'axe longitudinal du récipient.

10. Procédé selon la revendication 1, **caractérisé en ce que** l'unité de support est mise en rotation.

11. Procédé selon la revendication 1, **caractérisé en ce que** la chaleur et la pression sont appliquées après que les récipients ont été placés dans une chambre pressurisée, la chaleur et la pression étant appliquée à l'intérieur de cette chambre.

12. Procédé selon la revendication 1, **caractérisé en ce que** le procédé comporte l'étape qui consiste à soumettre les récipients à une étape de préconditionnement au cours de laquelle la température est augmentée depuis le niveau de la température ambiante à celui d'une température de stérliisation pendant que la pression est elle aussi augmentée.

13. Procédé selon la revendication 1, **caractérisé en ce que**, dès que la pression et la température ont atteint un niveau prédéterminé, les récipients sont soumis à ces pression et température pendant une période prédéterminée au cours de laquelle les récipients sont déplacés.

14. Procédé selon la revendication 13, **caractérisé en ce que**, dès que la période prédéterminée s'est écoulée, la température à laquelle est soumis le récipient est réduite pendant une période prédéterminée au cours de laquelle la pression est maintenue à son niveau.

15. Procédé selon la revendication 14, **caractérisé en ce que**, dès que la température a été suffisamment réduite, la pression est elle aussi réduite de manière à ce que la pression et la température sont ensuite réduites davantage pour revenir aux valeurs des conditions ambiantes.

16. Procédé selon la revendication 1, **caractérisé en ce que** le produit est stérilisé et/ou pasteurisé par ce procédé.

17. Procédé selon la revendication 16, **caractérisé en ce que** le produit est un produit salé ou sucré, comme par exemple une soupe, une sauce, des pickles, une sauce au jus de viande, un bouillon, une confiture, une conserve, une crème anglaise ou un autre produit similaire.

18. Unité de support (32) dans laquelle sont placés plusieurs récipients (2), chacun de ces récipients contenant un produit alimentaire (4), et au moins une partie de l'unité de support étant montée de manière à être mobile, et ainsi permettre le mouvement des récipients (2) au cours des procédés de stérilisation et/ou de pasteurisation, **caractérisé en ce que** ces récipients sont fabriqués en matière plastique et **en ce que** l'unité de support comporte une section, ou bien une pluralité de sections qui se mettent en prise avec un système de fermeture pour chaque récipient respectif de manière à retenir en place ces systèmes de fermeture, et comporte aussi d'autres sections permettant aux récipients d'être retenus dans leurs emplacements respectifs de l'unité de support et permettant en même temps la dilatation limitée de ces récipients (2) qui sont retenus dans ces sections.

19. Unité de support selon la revendication 18, **caractérisée en ce que** le mouvement des récipients et de l'unité de support provoque le mouvement d'un espace rempli de gaz à l'intérieur de chaque récipient, à travers le produit alimentaire contenu dans le récipient.

20. Unité de support selon la revendication 18, **caractérisée en ce que** le mouvement en question est une rotation qui s'effectue à une vitesse comprise entre 7 et 15 tours/minute.
